# FASCICULE DE BREVET EUROPEEN

(11) **EP 0 524 032 B1**
(45) Date de publication et mention de la délivrance du brevet: **07.12.1994**
(21) Numéro de dépôt: 92401428.5
(22) Date de dépôt: 26.05.1992
(51) Int. Cl.: F16K 31/06

(54) **Dispositif de régulation de pression pour circuit hydraulique**
Druckregeleinrichtung für hydraulischen Schaltkreis
Pressure regulation device for hydraulic circuit

(30) Priorité: 16.07.1991 FR 9108943
(43) Date de publication de la demande: 20.01.1993
(73) Titulaire: ALLIEDSIGNAL EUROPE SERVICES TECHNIQUES, 93700 Drancy (FR)
(72) Inventeur: Cheron, Jean-Marc, BENDIX EUROPE, F-93700 Drancy (FR); Kervagoret, Gilbert, BENDIX EUROPE, F-93700 Drancy (FR)
(74) Mandataire: Bentz, Jean-Paul

(56) Documents cités:
- CH-A- 530 564
- DE-B- 1 231 514
- GB-A- 970 551
- US-A- 4 844 122
- PATENT ABSTRACTS OF JAPAN vol. 9, no. 322 (M-440)(2045) 18 Décembre 1985

## Description

L'invention concerne un dispositif de régulation de pression pour circuit hydraulique.

Elle est particulièrement adaptée aux systèmes de freinage de véhicules automobiles à antiblocage des roues au freinage. Les systèmes actuels d'antiblocage mettent en oeuvre, entre une source de fluide sous pression et un récepteur hydraulique tel qu'un moteur de frein, une électrovalve commandée par un calculateur en fonction de signaux représentatifs de la rotation des roues du véhicule pour, de manière générale, détendre la pression du fluide dans le moteur hydraulique lorsque le calculateur détecte l'imminence du blocage d'une roue, puis connecter une deuxième source de fluide sous pression pour augmenter à nouveau la pression, jusqu'à une nouvelle détection d'imminence de blocage, le cycle se renouvelant alors. Des électrovalves du même type sont employées dans des systèmes d'antipatinage pour engendrer une pression dans un moteur de frein d'une roue motrice lorsque le calculateur détecte une tendance au patinage de cette roue motrice, puis détendre cette pression lorsque la tendance au patinage a disparu.

Les électrovalves utilisées sont des électrovalves fonctionnant en tout-ou-rien. Or les périodes d'antiblocage ou d'antipatinage où des cycles tels que décrits ci-dessus se succèdent, durent un temps très court pendant lequel l'électrovalve change de très nombreuses fois d'états. Cela provoque un bruit désagréable de battement de la partie mobile de l'électrovalve.

Par ailleurs, le système fonctionnant en tout-ou-rien, il apparaît des à-coups de pression dans les freins engendrant des régimes transitoires mal contrôlés.

Le document US-A-4 744 389 décrit une électrovalve dite proportionnelle assurant dans le circuit utilisateur une pression hydraulique fonction du courant circulant dans la bobine de l'électrovalve dans une plage déterminée de déplacement du noyau magnétique de l'électrovalve.

Une telle électrovalve présente alors l'avantage de pouvoir être commandée en faisant simplement varier le courant circulant dans la bobine sans nécessiter de battements de la partie mobile ; il en résulte donc une forte diminution des à-coups de pression dans les freins. En outre, une telle électrovalve peut aisément être commandée par un calculateur assurant un découpage à fréquence variable d'un courant continu tel qu'on le trouve à bord d'un véhicule automobile, ou bien un découpage à fréquence fixe et à rapport cyclique variable, l'intensité du courant intégré par la bobine étant alors fonction du rapport cyclique.

Toutefois, l'électrovalve décrite dans le document US-A-4,744,389 ne peut pas être disposée dans un circuit hydraulique de freinage à antiblocage des roues du fait des pressions mises en oeuvre, notamment lors de l'excitation de l'électrovalve. En effet, l'électrovalve de ce document est conçue pour fonctionner en permanence dans un système de régulation d'une pression relativement faible. Cette limitation physique interdit donc l'utilisation d'une telle électrovalve avec des pressions élevées dans le moteur hydraulique. En outre, cette électrovalve ne permet pas de faire croître linéairement la pression lorsque le courant décroît linéairement dans la bobine et vice-versa.

Un but de la présente invention est de réaliser une électrovalve permettant de faire varier linéairement la pression en fonction du courant dans la bobine, pouvant être excitée avec une pression élevée dans le circuit hydraulique, et qui soit de conception et de montage simple.

La présente invention a donc pour objet un dispositif de régulation de pression pour un circuit hydraulique comprenant au moins un générateur de fluide sous pression, un moteur hydraulique et un réservoir de fluide sous basse pression, et incluant une électrovalve pilotée par un calculateur et comportant dans une carcasse une bobine électrique et un noyau magnétique coulissant commandant un tiroir coulissant dans un alésage prévu dans un corps, le tiroir déterminant deux chambres disposées de part et d'autre du tiroir dans l'alésage, le tiroir comprenant une enceinte hydraulique communiquant avec le moteur hydraulique et déterminant une force de réaction s'ajoutant à la force engendrée par la bobine, à l'encontre d'un moyen élastique précontraint, l'enceinte étant constituée par un alésage borgne pratiqué dans le tiroir, une aiguille fermant l'enceinte de façon sensiblement étanche, tandis qu'un perçage radial la fait communiquer avec une gorge prévue à la périphérie du tiroir.

Selon l'invention, l'aiguille est en appui sur une coupelle immobile par rapport à la carcasse de la bobine électrique, et la coupelle définit la position du tiroir tout en servant d'appui pour un ressort de rappel d'un clapet à bille, ce clapet étant normalement fermé et disposé entre l'une des chambres et le réservoir de manière à isoler le circuit hydraulique sous pression du réservoir lorsque l'électrovalve n'est pas excitée et en ce que ce clapet est ouvert par le noyau magnétique actionné.

De préférence, cette coupelle est solidaire de la carcasse.

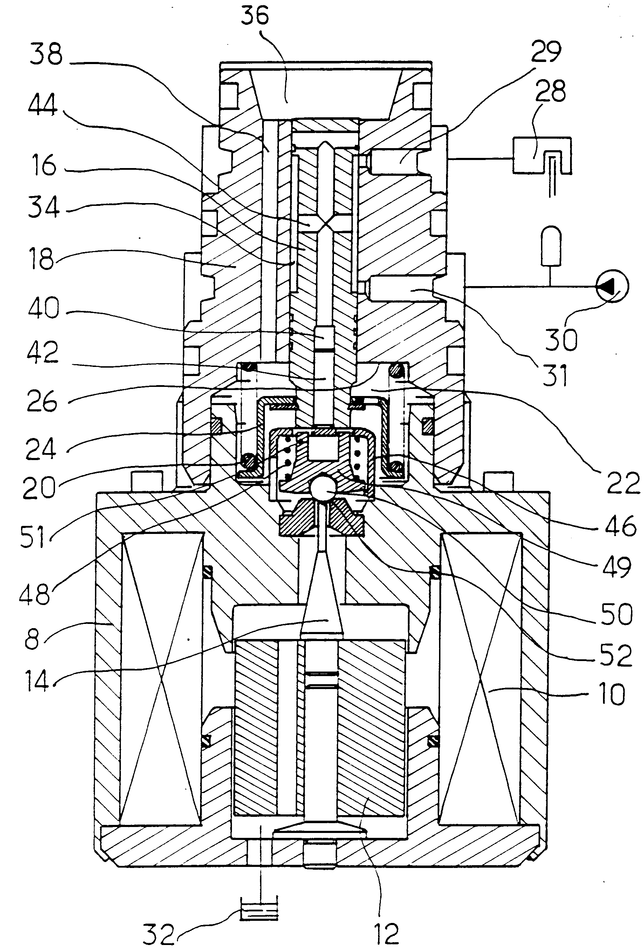

L'invention sera mieux comprise, et d'autres buts, avantages et caractéristiques de celle-ci apparaîtront plus clairement à la lecture de la description qui suit d'un mode préféré de réalisation donné à titre d'exemple non limitatif en référence aux dessins annexés sur lesquels :
- la Figure unique représente schématiquement en coupe un mode de réalisation d'un dispositif conforme à la présente invention en position de repos.

On sait que la bobine des électrovalves dites proportionnelles, présente la caractéristique essentielle de pouvoir fournir un effort sensiblement constant pour un courant déterminé dans une plage de déplacement du noyau magnétique non négligeable, de l'ordre de 2 à 3 mm. Cette caractéristique est généralement obtenue grâce à une géométrie particulière des pièces polaires. Cette caractéristique est mise en oeuvre dans la présente invention pour assurer la fonction requise par modulation du courant circulant dans la bobine pour éviter un fonctionnement avec une partie mobile battant très rapidement.

Sur la Figure, on reconnaît une telle électrovalve comprenant dans une carcasse 8 une bobine d'excitation 10, un noyau magnétique coulissant pourvu de son poussoir 14 s'appuyant sur un tiroir 16 coulissant dans un alésage d'un corps 18. Un ressort précontraint 20 est disposé dans une chambre 22 par exemple entre une coupelle 24 solidaire du tiroir 16 et une paroi 26 du corps 18 de façon à solliciter le tiroir 16 vers sa position de repos.

Le tiroir 16 est usiné de manière à pouvoir ouvrir ou fermer une communication entre un récepteur hydraulique utilisateur 28 raccordé à un conduit 29, une source de fluide sous pression 30 raccordée à un conduit 31 et un réservoir 32 conformément aux systèmes de régulation de pression hydraulique généralement utilisés. Pour ce faire, une gorge 34 est prévue à la périphérie du tiroir 16.

Les deux chambres 22 et 36 situées de part et d'autre du tiroir 16 dans l'alésage sont à la même pression grâce à un perçage 38 pratiqué dans le corps 18. Une enceinte 40, constituée par un alésage borgne pratiqué dans le tiroir 16, détermine sur le tiroir une force de réaction s'ajoutant à la force engendrée par la bobine 10. Cette enceinte 40 est fermée de façon sensiblement étanche par une aiguille 42, et communique avec la gorge 34 au moyen d'un perçage radial 44.

Cette aiguille 42 est en appui sur une coupelle 46 immobile par rapport à la carcasse 8 de la bobine 10, par exemple emmanchée à force dans cette carcasse. La coupelle 46 sert également d'appui pour le tiroir 16 et définit sa position de repos. La coupelle 46 sert enfin d'appui pour un ressort 48 de rappel d'un clapet 49 à bille 50 coopérant avec un siège 52 formé sur la carcasse 8. Grâce à cette disposition avantageuse, tous les composants de l'électrovalve sont assemblés uniquement par des mouvements de direction axiale, et il n'est plus besoin de goupilles et autres butées transversales.

En position de repos, telle que représentée, la source de fluide sous pression 30 est en communication avec le moteur hydraulique 28 par l'intermédiaire de la gorge 34, et l'enceinte 40 est en communication avec le moteur 28. Les deux chambres d'extrémité 22 et 36 communiquent entre elles et sont isolées du réservoir 32 par le clapet 50 reposant sur son siège 52.

Lorsque l'électrovalve est excitée, par exemple en période d'antiblocage des roues dans le cadre de l'application préférée de l'invention, tout d'abord le courant circulant dans la bobine engendre une force s'opposant à celle du ressort 48 pour soulever la bille 50 de son siège 52 et ouvrir la communication entre la chambre 22 et le réservoir 32, puis s'oppose à la force du ressort d'asservissement 20, le clapet 49 portant sur sa périphérie des doigts 51 régulièrement répartis et pénétrant dans des ouvertures correspondantes de la coupelle 46 pour agir sur le tiroir 16. La force est exercée par le poussoir 14 à l'encontre de celle du ressort 20 quelle que soit la pression régnant dans le circuit hydraulique. Ceci permet notamment à l'électrovalve de ne pas présenter une importante consommation électrique. L'ouverture du clapet 50,52 et la mise en communication des chambres 22 et 36 avec le réservoir 32 a lieu avant que le courant dans la bobine 10 n'atteigne son intensité nominale. Puis l'intensité étant nominale, le clapet 49 est en butée contre le tiroir 16 dont le mouvement, à l'encontre du ressort 20, ferme le conduit 31 isolant ainsi la source de fluide sous pression 30 du moteur 28. Du fait de la position de la gorge 34, cette dernière communique avec la chambre 36 et, par suite, avec le réservoir 32. Il se produit donc une détente de la pression du fluide dans le moteur. On aura compris que le mouvement du tiroir 16 à l'encontre du ressort 20 est engendré par le courant dans la bobine 10 et est favorisé par la réaction hydraulique dans l'enceinte 40 qui engendre une force s'ajoutant à celle produite par la bobine et opposée à celle engendrée par le ressort d'asservissement 20. En diminuant l'intensité du courant dans la bobine, la pression ayant chuté dans le moteur 28, la force de réaction hydraulique due à l'enceinte 40 diminue et le tiroir se déplace dans l'autre sens, refermant la communication entre le moteur 28 et la chambre 36, et donc le réservoir 32, et rétablissant ensuite si nécessaire la communication entre la source 30 et le moteur 28 permettant une remontée de la pression dans le moteur 28. Si l'on augmente l'intensité du courant dans la bobine, la pression va à nouveau chuter dans le moteur 28 puisque la communication entre le moteur et le réservoir 32 par l'intermédiaire de la gorge 34 et les chambres 22 et 36 sera réouverte.

On constate donc que d'une augmentation du courant dans la bobine résulte une diminution de la pression du fluide dans le moteur 28. On voit alors qu'en modulant, par exemple par découpage, le courant circulant dans la bobine 10, le tiroir 16 va prendre une position qui est fonction de la pression régnant dans l'enceinte 40, et l'on pourra, en pilotant judicieusement ce courant, appliquer au moteur 28 la pression de fluide désirée. En effet, la réaction hydraulique engendrée dans l'enceinte 40 va automatiquement ouvrir ou fermer les communications entre le moteur 28 et la source de fluide sous pression 30 et entre le moteur 28 et le réservoir 32 pour chaque valeur déterminée de l'intensité du courant circulant dans la bobine 10.

De plus, de par la disposition de la coupelle d'appui 46 pour l'aiguille 42 et le tiroir 16, le dispositif de l'invention est particulièrement simple à assembler et à démonter, et donc à entretenir.

## Revendications

1. Dispositif de régulation de pression pour un circuit hydraulique comprenant au moins un générateur (30) de fluide sous pression, un moteur hydraulique (28) et un réservoir de fluide (32) sous basse pression, et incluant une électrovalve pilotée par un calculateur et comportant dans une carcasse (8) une bobine électrique (10) et un noyau magnétique (12) coulissant commandant un tiroir (16) coulissant dans un alésage prévu dans un corps (18), le tiroir (16) déterminant deux chambres (22,36) disposées de part et d'autre du tiroir (16) dans l'alésage, le tiroir comprenant une enceinte hydraulique (40) communiquant avec le moteur hydraulique (28) et déterminant une force de réaction s'ajoutant à la force engendrée par la bobine (10), à l'encontre d'un moyen élastique précontraint (20), l'enceinte (40) étant constituée par un alésage borgne pratiqué dans le tiroir (16), une aiguille (42) fermant l'enceinte (40) de façon sensiblement étanche, tandis qu'un perçage radial (44) la fait communiquer avec une gorge (34) prévue à la périphérie du tiroir (16), caractérisé en ce que l'aiguille (42) est en appui sur une coupelle (46) immobile par rapport à la carcasse (8) de la bobine électrique (10), en ce que la coupelle (46) définit la position de repos du tiroir (16) et sert d'appui pour un ressort (48) de rappel d'un clapet (49) à bille (50), et en ce que ce clapet (49) à bille (50) est normalement fermé et est disposé entre l'une des chambres (22) et le réservoir (32) de manière à isoler le circuit hydraulique sous pression du réservoir (32) lorsque l'électrovalve n'est pas excitée et en ce que ce clapet est ouvert par le noyau magnétique actionné.

2. Dispositif selon la revendication 1, caractérisé en ce que la coupelle (46) est solidaire de la carcasse (8).

3. Dispositif selon l'une quelconque des revendications précédentes, caractérisé en ce que le clapet (49) comporte des doigts (51) pénétrant dans des ouvertures correspondantes de la coupelle (46) pour agir sur le tiroir (16).

4. Dispositif selon l'une quelconque des revendications précédentes, caractérisé en ce que le moyen élastique (20) est constitué par au moins un ressort logé dans l'une (22) desdites chambres.

5. Dispositif selon l'une quelconque des revendications précédentes, caractérisé en ce que les chambres (22,36) communiquent entre elles et sont isolées par rapport au réservoir (32) lorsque l'électrovalve n'est pas excitée, et en communication avec le réservoir (32) lorsque l'électrovalve est excitée.

## Claims

1. Pressure-regulating device for a hydraulic circuit comprising at least one generator (30) of pressurized fluid, a hydraulic motor (28) and a reservoir (32) of fluid under low pressure, and including an electrovalve pilot-controlled by a calculator and comprising, in a carcass (8), an electric coil (10) and a sliding magnetic core (12) controlling a slider (16) sliding in a bore provided in a body (18), the slider (16) defining two chambers (22, 36) arranged on either side of the slider (16) in the bore, the slider comprising a hydraulic enclosure (40) communicating with the hydraulic motor (28) and defining a reaction force supplementing the force generated by the coil (10), counter to a prestressed resilient means (20), the enclosure (40) consisting of a blind bore made in the slider (16), a needle (42) closing the enclosure (40) in a substantially leaktight manner, whilst a radial pierced hole (44) connects it to a groove (34) provided at the periphery of the slider (16), characterized in that the needle (42) bears on a cup (46) which is stationary with respect to the carcass (8) of the electric coil (10), in that the cup (46) defines the rest position of the slider (16) and serves as a support for a return spring (48) of a valve (49) with a ball (50), and in that this valve (49) with a ball (50) is normally closed and is arranged between one (22) of the chambers and the reservoir (32) so as to isolate the pressurized hydraulic circuit from the reservoir (32) when the electrovalve is not excited and in that this valve is opened by the actuated magnetic core.

2. Device according to Claim 1, characterized in that the cup (46) is integrally connected to the carcass (8).

3. Device according to any of the preceding claims, characterized in that the valve (49) comprises fingers (51) penetrating into corresponding orifices in the cup (46) in order to act on the slider (16).

4. Device according to any of the preceding claims, characterized in that the resilient means (20) consists of at least one spring housed in one (22) of said chambers.

5. Device according to any of the preceding claims, characterized in that the chambers (22, 36) communicate with each other and are isolated with respect to the reservoir (32) when the electrovalve is not excited, and are in communication with the reservoir (32) when the electrovalve is excited.

## Patentansprüche

1. Druckregelvorrichtung für einen Hydraulikkreis, der wenigstens einen Druckfluidgenerator (30), einen Hydraulikmotor (28) und einen Niederdruckfluidvorratsbehälter (32) enthält, sowie ein von einem Rechner gesteuertes Elektroventil, das in einem Gehäuse (8) eine elektrische Spule (10) sowie einen gleitenden Magnetkern (12) enthält, der einen in einer in einem Körper (18) vorgesehenen Bohrung gleitenden Schieber (16) steuert, wobei der Schieber (16) zwei Kammern (22, 36) bestimmt, die beiderseits des Schiebers (16) in der Bohrung angeordnet sind, wobei der Schieber einen Hydraulikraum (40) enthält, der mit dem Hydraulikmotor (28) in Verbindung steht und eine Reaktionskraft bestimmt, die sich zu der von der Spule (10) erzeugten Kraft hinzufügt und einem vorgespannten Elastikmittel (20) entgegenwirkt, wobei der Raum (40) durch eine im Schieber (16) ausgebildete Blindbohrung gebildet ist, wobei eine Nadel (42) den Raum (40) in im wesentlichen dichter Weise verschließt, während eine radiale Bohrung (44) ihn mit einer am Umfang des Schiebers (16) vorgesehenen Nut (34) verbindet, dadurch gekennzeichnet, daß die Nadel (42) sich an einer Kapsel (46) abstützt, die bezüglich des Gehäuses (8) der elektrischen Spule (10) festgelegt ist, daß die Kapsel (46) die Ruhestellung des Schiebers (16) bestimmt und als Auflager für eine Rückstellfeder (48) eines Ventils (49) mit Kugel (50) dient, daß das Ventil (49) mit Kugel (50) normalerweise geschlossen ist und zwischen einer (22) der Kammern und dem Vorratsbehälter (32) so angeordnet ist, daß der unter Druck stehende Hydraulikkreis vom Vorratsbehälter (32) isoliert ist, wenn das Elektroventil nicht erregt ist, und daß das Ventil vom betätigten Magnetkern geöffnet wird.

2. Vorrichtung nach Anspruch 1, dadurch gekennzeichnet, daß die Kapsel (46) fest mit dem Gehäuse (8) verbunden ist.

3. Vorrichtung nach einem der vorhergehenden Ansprüche, dadurch gekennzeichnet, daß das Ventil (49) Finger (51) enthält, die in entsprechende Öffnungen der Kapsel (46) eindringen, um auf den Schieber (16) einzuwirken.

4. Vorrichtung nach einem der vorhergehenden Ansprüche, dadurch gekennzeichnet, daß das Elastikmittel (20) durch wenigstens eine Feder gebildet ist, die in einer (22) der Kammern angeordnet ist.

5. Vorrichtung nach einem der vorhergehenden Ansprüche, dadurch gekennzeichnet, daß die miteinander in Verbindung stehenden Kammern (22, 36) vom Vorratsbehälter (32) isoliert sind, wenn das Elektroventil nicht erregt ist, und mit dem Vorratsbehälter (32) in Verbindung stehen, wenn das Elektroventil erregt ist.
